**Europäisches Patentamt**

**European Patent Office**

**Office européen des brevets**

(19)

(11) Numéro de publication : **0 325 076 B1**

(12)

# FASCICULE DE BREVET EUROPEEN

(45) Date de publication du fascicule du brevet :
**26.02.92 Bulletin 92/09**

(51) Int. Cl.⁵ : **B29C 45/00**, B29C 45/53,
B29C 45/77

(21) Numéro de dépôt : **88470024.6**

(22) Date de dépôt : **22.12.88**

(54) Procédé et dispositif de moulage par injection de matériaux composites.

(30) Priorité : **14.01.88 FR 8800473**

(43) Date de publication de la demande :
**26.07.89 Bulletin 89/30**

(45) Mention de la délivrance du brevet :
**26.02.92 Bulletin 92/09**

(84) Etats contractants désignés :
**AT CH DE ES FR GB IT LI NL SE**

(56) Documents cités :
**EP-A- 0 149 586
US-A- 4 720 364
KUNSTSTOFFTECHNIK, vol. 12, no. 6, juin
1973, pages 163-166, Krausskopf-Verlag für
Wirtschaft GmbH, Mainz, DE; K. EICHLER:
"Erfahrungen mit der Spritzgussverarbeitung
von GUP-Massen"**

(73) Titulaire : **SEVA, société dite,
43, rue du Pont de Fer
F-71100 Chalon-sur-Saône (FR)**

(72) Inventeur : **Belot, Pierre
5, rue de Touraine
F-71880 Chatenoy le Royal 5 (FR)**
Inventeur : **Dupuis, Alain
12, rue Edouard Manet
F-71100 Chalon sur Saone (FR)**

(74) Mandataire : **Puit, Thierry et al
Centre de Recherches de Pont-à-Mousson
Service de Propriété Industrielle Boîte Postale
109
F-54704 Pont-à-Mousson Cédex (FR)**

EP 0 325 076 B1

## Description

La présente invention est relative à un procédé et un dispositif de moulage par injection de matériaux composites constitués d'une résine thermodurcissable, de fibres de renforcement telles que des fibres de verre et d'une charge.

Il est bien connu que les caractéristiques mécaniques des matériaux composites, notamment leur résistance aux chocs, dépendent essentiellement de la longueur des fibres de renforcement et de l'orientation de celles-ci. Toute la difficulté dans la mise en oeuvre de ces matériaux composites réside dans le fait qu'il faut éviter de briser les fibres de renforcement longues lors du dosage de la quantité de matériau composite à injecter et lors de l'injection de celui-ci dans le moule.

Dans des dispositifs d'injection connus, le matériau composite est amené par un dispositif d'alimentation à une vis disposée dans un fourreau fixe, où il est malaxé, puis injecté dans un moule par déplacement de cette vis dans le fourreau fixe. Pour empêcher que, au cours de la phase d'injection, le matériau composite ne remonte dans la vis, un dispositif formant clapet anti-retour est disposé à l'extrémité de celle-ci. Ce clapet présente l'inconvénient d'obliger le matériau composite à suivre un trajet sinueux, ce qui provoque le bris des fibres de renforcement et a pour conséquence une diminution des caractéristiques mécaniques de la pièce obtenue. En outre, ce type de dispositifs n'assure pas un dosage précis de la quantité de matériau composite à injecter dans le moule.

Dans d'autres dispositifs connus, on utilise une vis disposée dans un fourreau mobile, qui porte le dispositif d'alimentation en matériau composite, monté coulissant dans un fourreau fixe. Le fourreau mobile, jouant le rôle de piston d'injection dans le fourreau fixe, délimite avec ce dernier une chambre à volume variable qui reçoit le matériau composite à injecter. Le fourreau mobile fait aussi office de clapet avec l'extrémité de la vis, évitant ainsi la remontée du matériau composite dans la vis lors de la phase d'injection. Bien que ces dispositifs permettent d'éviter une destruction des fibres de renforcement du fait qu'il n'y a pas de clapet de fermeture à l'extrémité de la vis, celles-ci peuvent être endommagées par la vis de malaxage lorsqu'elles sont amenées dans la chambre à volume variable. En effet, il se produit un cisaillement du matériau composite entre les filets de la vis et la paroi interne du fourreau mobile. Par contre, ces dispositifs assurent un dosage satisfaisant de la quantité de matériau composite à injecter dans le moule.

On connaît encore un autre dispositif dans lequel le matériau composite à injecter est placé dans un cylindre creux d'injection à l'intérieur duquel peuvent se déplacer un fourreau et un piston d'injection intérieur au fourreau. Ce dernier sert à obturer l'orifice par lequel est introduit le matériau composite à l'intérieur du cylindre d'injection. Ce dispositif ne détériore pas les fibres de renforcement du matériau composite mais n'assure pas un dosage précis de la quantité de ce dernier à injecter dans le moule.

La présente invention a pour but de remédier à ces inconvénients et a pour objet un procédé d'injection de matériaux composites suivant lequel :

– on introduit dans un cylindre creux d'un dispositif d'injection une quantité de matériau composite supérieure à la quantité nécessaire au moulage d'une pièce ;

– on compacte le matériau composite contenu dans le cylindre creux au moyen d'un piston mobile dans le cylindre, jusqu'à l'obtention d'un taux de compactage déterminé du matériau composite ;

– on repère la position du piston correspondant au taux de compactage déterminé ;

– enfin, à partir de la position repérée du piston, on fait avancer celui-ci d'une longueur L correspondant à l'injection de la masse de matériau composite strictement nécessaire au moulage de la pièce désirée.

L'invention a également pour objet un dispositif pour la mise en oeuvre du procédé ci-dessus, ce dispositif étant constitué par un cylindre creux, alimenté en matériau composite par un dispositif d'alimentation communiquant avec le cylindre creux par un orifice, par un piston mobile dans le cylindre creux sous l'action d'un vérin, et par une filière d'injection munie de capteurs de pression fixée à l'extrémité libre du cylindre creux d'injection.

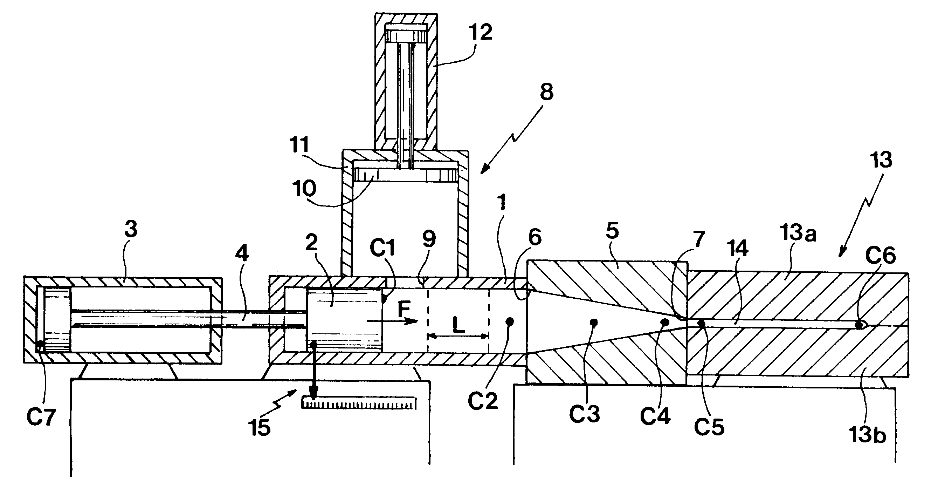

D'autres caractéristiques et avantages de l'invention apparaîtront au cours de la description qui va suivre, faite en référence au dessin annexé, donné uniquement à titre d'exemple non limitatif, qui représente schématiquement une vue en coupe verticale d'un dispositif d'injection permettant la mise en oeuvre du procédé selon l'invention.

Le dispositif de moulage par injection selon l'invention représenté au dessin annexé se compose d'un cylindre creux 1 d'injection à l'intérieur duquel se déplace un piston 2 d'injection sous l'action d'un vérin 3 auquel il est relié par une tige 4 rigide. A l'extrémité libre du cylindre creux 1 d'injection, opposée au vérin 3, est fixée une filière 5 d'injection. L'orifice d'entrée 6 de celle-ci est circulaire et a le même diamètre que celui du cylindre creux 1 tandis que son orifice de sortie 7 a la forme d'une fente étroite, de faible hauteur et de grande largeur, dont la section de passage est plus petite que celle de l'orifice d'entrée 6.

Un dispositif d'alimentation 8 en matériau composite débouche dans le cylindre creux 1 par un orifice 9 ménagé dans la paroi de celui-ci. Il est constitué par un piston bourreur 10 se déplaçant dans un cylindre creux 11 sous l'action d'un vérin 12. Le dispositif d'alimentation 8 peut contenir la quantité de matériau composite nécessaire à la confection de plusieurs pièces. Le matériau composite est préparé à l'extérieur du dispositif d'alimentation 8, dans une unité (non représentée) où sont mélangés les différents ingrédients nécessaires à la constitution du matériau composite, résine thermodurcissable, fibres de renforcement, et charge, puis transféré dans le dispositif d'alimentation 8.

L'ensemble cylindre creux 1, vérin 3, filière 5, est monté mobile en translation selon l'axe du cylindre creux 1 pour amener l'orifice de sortie 7 de la filière 5, en forme de fente étroite, contre l'orifice d'entrée d'un moule 13 chauffé, constitué de deux demi-moules 13a et 13b délimitant une cavité 14 de moulage. L'orifice d'entrée de la cavité 14 de moulage est lui aussi une fente ayant sensiblement la même hauteur que celle de l'orifice 7 de la filière 5.

Le piston 2 d'injection est muni d'un capteur de position 15, relié à un calculateur (non représenté), permettant de connaître à chaque instant sa position dans le cylindre creux 1 d'injection. En outre, un capteur de pression C1 est disposé sur la face avant du piston 2.

Dans le cylindre creux 1, dans la filière 5 et dans la cavité de moulage 14 du moule 13 sont disposés des capteurs de pression, au nombre de cinq dans l'exemple de réalisation décrit, désignés par C2, C3, C4, C5, C6. Ces capteurs mesurent la pression statique du matériau composite en différents points du dispositif d'injection.

Un capteur de pression C7 est disposé dans le vérin 3 d'injection et mesure la pression hydraulique du fluide moteur à l'intérieur de ce vérin.

Tous ces capteurs de pression C1, C2, ... C7, sont reliés à un calculateur qui, en prenant en compte les informations fournies par les différents capteurs, pilote les différentes phases du procédé d'injection.

Le procédé de l'invention est mis en oeuvre de la manière suivante à l'aide du dispositif décrit ci-avant. On se place dans le cas où la cavité de moulage 14 du moule 13 contient une pièce en matériau composite qui vient d'être polymérisée, l'extrémité de la filière 5 et le moule 13 étant en contact. Le piston 2 est reculé afin de permettre l'introduction de matériau composite dans le cylindre creux 1. Sa position reculée est contrôlée grâce au capteur de position 15. Dans cette position, l'orifice 9 est dégagé. Le dispositif d'alimentation 8 est actionné et une certaine quantité de matériau composite, supérieure à la quantité strictement nécessaire au moulage d'une pièce, est poussée par le piston 10 et introduite sous une faible pression dans le cylindre creux 1. Le piston 2 d'injection, sous l'action du vérin 3, avance suivant la direction de la flèche F. Au cours de son avance, il obture l'orifice 9, fermant ainsi le cylindre 1 d'injection, et comprime le matériau composite, contenu dans ce cylindre, qui ne peut s'écouler car l'orifice 7 de sortie de la filière 5 débouche sur l'entrée de la cavité 14 de moulage qui est déjà remplie par la pièce moulée lors du cycle précédent. Le piston 2 continue d'avancer dans le cylindre 1, en compactant le matériau composite, jusqu'à ce qu'un taux de compactage déterminé soit obtenu. Ce taux de compactage est connu grâce à la pression indiquée par les capteurs de pression. L'avance du piston 2 est alors stoppée et sa position repérée grâce au capteur de position 15 et mémorisée dans le calculateur. Le moule 13, contenant la pièce moulée lors du cycle précédent est alors évacué et remplacé par un autre moule dont la cavité 14 de moulage est vide. Au cours du changement de moule, le matériau composite contenu dans le cylindre 1 et la filière 5 ne peut s'écouler à l'extérieur de cette dernière en raison de sa très grande viscosité, de la faible section de passage offerte par l'orifice de sortie 7 de ladite filière 5, et d'un recul partiel appliqué au piston 2.

Une fois le nouveau moule 13 en place contre la filière 5, le piston 2 reprend son avance et accomplit une course de longueur L, bien déterminée, commandée par le calculateur, pour injecter la quantité de matériau composite juste nécessaire pour la confection d'une nouvelle pièce. La vitesse de déplacement du piston 2 d'injection lors de sa course de longueur L n'est pas constante mais modulée suivant une programmation établie à l'avance qui commande la pression hydraulique du fluide moteur actionnant le vérin 3. Lorsque le piston 2 a accompli sa course de longueur L, il est maintenu dans sa position. Les capteurs C5 et C6 contrôlent le remplissage complet du moule. La phase de polymérisation de la pièce moulée contenue dans la cavité 14 du moule 13 peut alors commencer. A la fin de cette phase, le piston 2 recule pour retrouver sa position initiale et un nouveau cycle d'injection peut recommencer.

Les avantages présentés par l'invention sont les suivants :

– Le compactage du matériau composite jusqu'à l'obtention d'un taux de compactage bien déterminé, avant son injection dans le moule, permet d'injecter un produit qui, pour des proportions identiques de composants, a une masse constante. En effet, le matériau composite introduit dans le cylindre d'injection a une masse volumique variable d'un échantillon à l'autre du fait de sa texture irrégulière. La phase de compactage permet de remédier à cette irrégularité.

– L'obtention par compactage d'un matériau composite de masse volumique connue permet un dosage précis de la quantité de matériau injectée. En effet, à composition identique, un matériau composite non polymérisé a, sous une pression de compactage donnée, une masse volumique connue. A la fin de la phase de compactage, on connaît donc la masse volumique du matériau contenu dans le cylindre 1 d'injection et la position du piston 2 d'injection. La surface de la section transversale du cylindre 1 d'injection étant connue elle aussi, il est facile de calculer la course L à donner au piston d'injection pour injecter une masse de matériau composite correspondant à celle de la pièce que l'on veut obtenir par moulage. La course L est déterminée par le calculateur auquel sont reliés les capteurs de pression C1, C2, C3, C4, et le capteur de position 15 du piston 2. On évite ainsi le gaspillage de matériau composite.

– Les capteurs C2, C3, C4, C5, C6 permettent de suivre l'écoulement du matériau composite au cours de l'injection et de vérifier le remplissage complet du moule.

– Le dispositif d'injection ne comporte aucun clapet et ne présente pas de changement de direction brusque. Il en résulte que les fibres de renforcement, même si elles sont de grande longueur, ne subissent aucun dommage pendant l'injection et que les pièces obtenues par ce procédé présentent de bonnes qualités mécaniques et notamment une bonne résistance aux chocs. Ainsi, avec ce procédé, on obtient des pièces dont la résistance aux chocs est multipliée par 3 à 4 par rapport aux pièces obtenues par injection utilisant une vis-piston conventionnnelle et une résistance multipliée par 2 par rapport à celles obtenues par injection au moyen d'une vis doseuse et d'un fourreau coulissant.

– Toutes les phases de l'injection étant automatisées et commandées par un calculateur qui compare à chaque instant les valeurs fournies par les différents capteurs avec les valeurs mises en mémoire, on obtient une très grande régularité de la production.

En variante, il peut être envisagé de munir l'orifice 7 de sortie de la filière 5 d'un obturateur de type connu non représenté. Dans ce cas, cet obturateur sera fermé lors de la phase de compactage du matériau composite et ouvert lors de la phase d'injection de ce dernier. Cet obturateur peut être constitué, par exemple, par une lame guillotine actionnée par un vérin.

Bien qu'elle n'ait été décrite que pour le mode de réalisation décrit ci-avant, la présente invention en englobe également toutes les variantes définies par les revendications.

## Revendications

1. Procédé de moulage par injection de matériaux composites constitués d'une résine thermodurcissable, de fibres de renforcement et d'une charge, caractérisé en ce que

– on introduit dans un cylindre creux (1) d'un dispositif d'injection une quantité de matériau composite supérieure à la quantité nécessaire au moulage d'une pièce ;

– on compacte le matériau composite contenu dans le cylindre creux (1) au moyen d'un piston (2), mobile dans le cylindre (1), jusqu'à l'obtention d'un taux de compactage déterminé du matériau composite ;

– on repère la position du piston (2) correspondant au taux de compactage déterminé ;

– enfin, à partir de la position repérée du piston (2), on fait avancer celui-ci d'une longueur (L) calculée correspondant à l'injection de la masse de matériau composite strictement nécessaire au moulage de la pièce désirée.

2. Procédé suivant la revendication 1 caractérisé en ce que, durant la phase de compactage du matériau composite, l'extrémité du dispositif d'injection, par laquelle s'écoule le matériau injecté, est obturée.

3. Procédé suivant la revendication 1 caractérisé en ce que les différentes phases du procédé d'injection sont commandées par un calculateur.

4. Procédé suivant la revendication 1 caractérisé en ce que durant la phase d'injection la vitesse du piston (2) est variable lors de son avance de longueur (L).

5. Dispositif pour la mise en oeuvre du procédé suivant les revendications 1 à 4 constitué par un cylindre creux (1), alimenté en matériau composite par un dispositif d'alimentation (8), communiquant avec le cylindre creux (1) par un orifice (9), par un piston (2) mobile dans le cylindre creux (1) sous l'action d'un vérin (3), et par une filière (5) d'injection fixée à l'extrémité libre du cylindre creux (1) d'injection, caractérisé en ce que le piston (2) est muni d'un capteur de position (15) et d'un capteur de pression (C1) disposé sur sa face avant, lesdits capteurs étant reliés à un calculateur.

6. Dispositif suivant la revendication 5, caractérisé en ce que des capteurs de pression sont disposés dans le cylindre creux (1) dans la filière (5) et dans la cavité (14) de moulage d'un moule (13) communiquant avec la filière (5), lesdits capteurs étant reliés à un calculateur.

## Claims

1. Method of injection moulding composite materials composed of a heat-curable resin, reinforcing fibres and a filler, characterized in that

– there is introduced into a hollow cylinder (1) of an injection apparatus a quantity of composite material greater than the quantity necessary for moulding one moulding;

– the composite material contained in the hollow cylinder (1) is compacted by means of a piston (2) movable in the cylinder (1), until a predetermined compacting ratio of the composite material is obtained;

– the position of the piston (2) corresponding to the predetermined compacting ratio is marked;
– finally, starting from the marked position of the piston (2), the latter is advanced by a length (L) calculated to correspond to the injection of the mass of composite material strictly necessary for moulding the desired moulding.

2. Method according to Claim 1, characterized in that during the phase of compacting the composite material the end of the injection apparatus through which the injected material flows out is closed off.

3. Method according to Claim 1, characterized in that the various phases of the injection method are controlled by computer.

4. Method according to Claim 1, characterized in that during the injection phase the speed of the piston (2) is variable during its advance of length (L).

5. Apparatus for implementing the method according to Claims 1 to 4, composed of a hollow cylinder (1) supplied with composite material by a supply apparatus (8), communicating with the hollow cylinder (1) through an opening (9), of a piston (2) movable in the hollow cylinder (1) under the action of a jack (3), and of an injection die (5) secured at the free end of the hollow injection cylinder (1), characterized in that the piston (2) is equipped with a position sensor (15) and with a pressure sensor (C1) arranged on its front face, the said sensors being connected to a computer.

6. Apparatus according to Claim 5, characterized in that the pressure sensors are arranged in the hollow cylinder (1) in the die (5) and in the moulding cavity (14) of a mould (13) communicating with the die (5), the said sensors being connected to a computer.

**Patentansprüche**

1. Verfahren zum Spritzgießen von gemischten Stoffen, die aus einem wärmehärtbaren Harz, Verstärkungsfasern und einem Füllstoff bestehen, **dadurch gekennzeichnet, daß**
– eine Menge an zusammengesetztem Material, die größer ist als die für das Formen eines Werkstücks erforderliche Menge, in einen Hohlzylinder (1) einer Einspritzvorrichtung eingeführt wird;
– das in dem Hohlzylinder (1) befindliche zusammengesetzte Material mittels eines in dem Zylinder (1) beweglich angeordneten Kolbens (2) verdichtet wird, bis ein gegebener Verdichtungsgrad des zusammengesetzten Materials erreicht ist;
– die dem vorgegebenen Verdichtungsgrad entsprechende Stellung des Kolbens (2) markiert wird,
– schließlich der Kolben (2) von der markierten Stellung aus um eine berechnete Wegstrecke (L), die dem Einspritzen genau der Menge an zusammengesetztem Material entspricht, die für die Herstellung des gewünschten Werkstücks erforderlich ist, nach vorne bewegt wird.

2. Verfahren nach Anspruch 1, **dadurch gekennzeichnet, daß** das Ende der Einspritzvorrichtung, durch das das eingespritzte Material fließt, während der Verdichtungsphase des zusammengesetztes Materials verschlossen ist.

3. Verfahren nach Anspruch 1, **dadurch gekennzeichnet, daß** die verschiedenen Phasen des Einspritzverfahrens durch einen Rechner gesteuert werden.

4. Verfahren nach Anspruch 1, **dadurch gekennzeichnet, daß** die Geschwindigkeit des Kolbens (2) während der Einspritzphase bei seiner Vorwärtsbewegung um die Strecke (L) veränderlich ist.

5. Vorrichtung zur Durchführung des Verfahrens nach den Ansprüchen 1 bis 4, welche einen Hohlzylinder (1), dem durch eine Beschickungsvorrichtung (8) zusammengesetztes Material zugeführt wird und der mit dem Hohlzylinder (1) über eine Öffnung (9) in Verbindung steht, einen in dem Hohlzylinder (1) mittles eines Hubzylinders (3) bewegbaren Kolben (2) und eine am freien Ende des Einspritzhohlzylinders (1) befestigte Einspritzdüse (5) aufweist, **dadurch gekennzeichnet, daß** der Kolben (2) einen Positionssensor (15) und einen auf seiner Vorderseite angeordneten Druckfühler (C1) aufweist, wobei diese Sensoren mit einem Rechner verbunden sind.

6. Vorrichtung nach Anspruch 5, **dadurch gekennzeichnet, daß** die Druckfühler in dem Hohlzylinder (1), in der Düse (5) und in dem Formhohlraum (14) einer mit der Düse (5) verbundenen Form (13) angeordnet und mit einem Rechner verbunden sind.